# EUROPÄISCHE PATENTSCHRIFT

(11) **EP 1 566 945 B1**
(45) Veröffentlichungstag und Bekanntmachung des Hinweises auf die Patenterteilung: **23.05.2007**
(21) Anmeldenummer: 05002526.1
(22) Anmeldetag: 07.02.2005
(51) Int. Cl.: H04L 29/06, H04Q 7/38, H04L 12/28, H04L 12/56

(54) **Altersverifikation durch ein Mobilfunknetz**
Age verification by a mobile communication network
Vérification de l'âge par un réseau de communications mobiles

(30) Priorität: 19.02.2004 DE 102004008576
(43) Veröffentlichungstag der Anmeldung: 24.08.2005
(73) Patentinhaber: Vodafone Holding GmbH, 40213 Düsseldorf (DE)
(72) Erfinder: Hennings, Kai, Dipl.-Kaufmann, 40547 Düsseldorf (DE)
(74) Vertreter: Weisse, Renate

(56) Entgegenhaltungen:
- EP-A- 1 331 543
- US-A1- 2003 131 102
- US-B1- 6 651 090

## Beschreibung

### Technisches Gebiet

Die Erfindung betrifft ein Verfahren zur Altersverifikation über ein Mobilfunknetz für altersabhängige Dienstleistungen mit folgenden Verfahrensschritten:
(a) Erfassen der Identifikation und des Alters eines Mobilfunkteilnehmers in einer Speichereinheit eines Mobilfunknetzbetreibers als Identifikationsdaten eines Mobilfunkteilnehmers bei Ausgabe einer SIM-Karte für das Mobilfunkendgerät, welche zur Teilnahme am Mobilfunk berechtigt,
(b) Feststellen der Identifikation des Mobilfunkteilnehmers beim Einbuchen in ein Mobilfunknetz mittels Mobilfunkendgerät, wobei weitere Identifikationsdaten auf einer SIM-Karte gespeichert sind und an eine Verwaltungseinheit des Mobilfunknetzes übermittelt werden,
(c) Generieren eines digitalen Schlüssels für die altersabhängigen Dienstleistungen, welcher an den für die altersabhängigen Dienstleistungen berechtigten Mobilfunkteilnehmer übermittelt wird.

### Stand der Technik

Einige Dienstleistungen, wie beispielsweise der Zugang zu erotischen oder gewalttätigen Angeboten, sind altersabhängig. Üblicherweise muss ein Kunde, der solche Angebote wahrnehmen will seine Identität dem Anbieter solcher altersabhängigen Dienstleistungen z.B. durch Vorlage seines Personalausweises preisgeben. Der Anbieter kann dann anhand der vorgelegten Dokumente überprüfen, ob das erforderliche Alter vorliegt. Alternativ kann ein Kunde auch zur Post gehen, die eine Identitätsfeststellung vornimmt und diese dem Dienstleister übermittelt. Viele potentielle Kunden scheuen sich aber, ihre Identität bekannt zu geben. Sie möchten lieber anonym bleiben und nehmen derzeit diese Angebote daher entweder gar nicht in Anspruch oder nur bei solchen Anbietern, die keine Altersüberprüfung vornehmen.

Es ist bekannt, dass bei der Anmeldung eines Zugangs für Mobilfunkendgeräte bereits sämtliche Identifikationsdaten eines Mobilfunkteilnehmers erfasst werden. Die Daten werden regelmäßig beim Einbuchen in ein Mobilfunknetz überprüft.

Die EP 1 331 543 A2 offenbart ein Verfahren zur Altersverifikation über ein Mobilfunknetz für altersabhängige Dienstleistungen. Um altersabhängige Dienstleistungen nutzen zu können, fordert ein Mobilfunkteilnehmer einen Berechtigungsnachweis von einem Berechtigungsnachweisdienst an. Dazu übermittelt der Mobilfunkteilnehmer persönliche Daten, wie beispielsweise eine auf einer SIM-Karte gespeicherte Mobilfunkteilnehmeridentität (IMSI = International Mobile Subscriber Identity) an den Berechtigungsnachweisdienst. Der Berechtigungsnachweisdienst prüft mit den übermittelten persönlichen Daten und weiteren, gespeicherten Daten des Mobilfunkteilnehmers dessen Zugangsberechtigung für altersabhängige Dienste und stellt einen entsprechenden Berechtigungsnachweis aus. Anschließend sendet der Berechtigungsnachweisdienst den Berechtigungsnachweis an das Mobilfunkendgerät des Mobilfunkteilnehmers. Dort wird der Berechtigungsnachweis in der SIM-Karte gespeichert. Bei jeder Inanspruchnahme eines altersabhängigen Dienstes sendet das Mobilfunkendgerät zunächst den Berechtigungsnachweis an den altersabhängige Dienst. Der Dienst vergleicht den Berechtigungsnachweis mit vorgegebenen Alterskriterien und gestattet dem Mobilfunkteilnehmer bei einer Erfüllung der Alterskriterien eine Inanspruchnahme altersabhängiger Leistungen. Optional kann der altersabhängige Dienst die Gültigkeit des Berechtigungsnachweises durch eine Rückfrage bei dem Berechtigungsnachweisdienst überprüfen.

Ein Nachteil des in der EP 1 331 543 A2 dargestellten Verfahrens besteht darin, dass jeder Benutzer des Mobilfunkendgeräts mit den bereits angeforderten und gespeicherten Berechtigungsnachweisen Zugang zu altersabhängigen Diensten erhält. Insbesondere erhalten beispielsweise auch Kinder eines Mobilfunkteilnehmers bei gestatteter oder heimlicher, unberechtigter Benutzung des Mobilfunkendgeräts Zugang zu alterabhängigen Diensten. Eine Beschränkung von Berechtigungsnachweisen auf einzelne Benutzer eines Mobilfunkendgeräts ist nicht vorgesehen.

### Offenbarung der Erfindung

Aufgabe der Erfindung ist es daher, die Nachteile des Standes der Technik zu beseitigen und ein Verfahren zu schaffen, welches es erlaubt auf einfache Weise das Alter einer Person möglichst anonym festzustellen.

Erfindungsgemäß wird die Aufgabe dadurch gelöst, dass bei einem Verfahren zur Altersverifikation über ein Mobilfunknetz für altersabhängige Dienstleistungen der eingangs genannten Art zusätzlich nachfolgende Verfahrensschritte vorgenommen werden:
(d) Überprüfen der Identität und der Berechtigung anhand des von dem Mobilfunkteilnehmer eingegebenen digitalen Schlüssels und der Identifikationsdaten eines Mobilfunkteilnehmers, welche in der Speichereinheit des Mobilfunkbetreibers gespeichert sind, bei jeder Einbuchung in eine altersabhängige Dienstleistung durch eine Kontrolleinheit des Mobilfunknetzes.

Das Prinzip des erfindungsgemäßen Verfahrens liegt darin, dass nunmehr die einmal bei der Anmeldung zum Mobilfunk erfassten Daten eines Mobilfunkteilnehmers verwendet werden, um eine Altersverifikation für Dritte vornehmen zu können. Um Missbrauch vorzubeugen wird der digitale Schlüssel erzeugt, so dass sichergestellt wird, dass nur der Berechtigte Zugriff auf die altersabhängigen Dienstleistungen hat.

Ein Benutzer kann sich in der Regel nicht lange Ziffernkolonnen merken, wenn er nicht eine Assoziation zu einem Begriff, Bild oder Datum im Gedächtnis hat. Um sich das Merken von Passwörtern zu erleichtern erweist sich als vorteilhafte Ausgestaltung des erfindungsgemäßen Verfahrens zur Altersverifikation über ein Mobilfunknetz daher, wenn der digitale Schlüssel mit höchstens 5 Ziffern generiert wird. Diese Ziffernanzahl liefert einen ausreichenden Sicherheitsstandard und kann aber von einem Mobilfunkteilnehmer relativ leicht gemerkt werden.

Eine bevorzugte Ausbildung des erfindungsgemäßen Verfahrens besteht darin, dass eine bestehende PIN (Personal Identification Number), welche zum Betreiben eines Mobilfunkendgeräts mit einer SIM-Karte erforderlich ist, ganz oder teilweise in den digitalen Schlüssel für die altersabhängigen Dienstleistungen integriert wird. Durch diese Maßnahme wird es einem Mobilfunkteilnehmer es erleichtert, sich seinen digitalen Schlüssel für die Altersverifikation zu merken. Die bestehende PIN ist einem Mobilfunkteilnehmer bereits bekannt, so dass die Assoziation zu einem anderen ähnlichen Code erleichtert wird.

Eine weitere vorteilhafte Ausgestaltung des erfindungsgemäßen Verfahrens liegt darin, dass mobilfunknetzfremde Dienstleistungen durch eine Verbindung mit der Kontrolleinheit des Mobilfunkhetzes eine Altersverifikation durchführen können. Dadurch kann auch die Altersverifikation durch dritte, mobilfunknetzfremde Dienstleistungen in Anspruch genommen werden. Eine Verbindung über das Mobilfunknetz für einen Dienstleister zur Altersüberprüfung ist nicht unbedingt erforderlich. Eine Festnetzverbindung mit der Kontrolleinheit reicht aus.

In einer vorteilhaften Ausgestaltung des erfindungsgemäßen Verfahrens wird dem Mobilfunkteilnehmer der digitale Schlüssel für die altersabhängigen Dienstleistungen als Kurznachricht SMS (=Short Message Service) an sein Mobilfunkendgerät übermittelt. Auf diese Weise erhält ein Benutzer auf sehr einfache und direkte Weise seinen digitalen Schlüssel. SMS ist ein gängiges Datenübermittlungsverfahren in Mobilfunknetzen, weshalb es sich einfach für das erfindungsgemäße Verfahren einsetzen lässt.

Eine bevorzugte Ausbildung des erfindungsgemäßen Verfahrens ergibt sich ferner dadurch, dass der Mobilfunkteilnehmer zum Erhalten des digitalen Schlüssels für die altersabhängigen Dienstleistungen eine Super-PIN und/oder einen Code, wie beispielsweise die Personalausweisnummer, für Administratorrechte für das Mobilfunkendgerät zur Identifikation benötigt. Damit wird zusätzlich abgesichert, dass auch wirklich der Berechtigte den digitalen Schlüssel erhält.

Um festzustellen, ob ein Mobilfunkteilnehmer mit einem gültigen digitalen Schlüssel z.B. einen bestimmten Ort besuchen darf, erfolgt eine Standortbestimmung des Mobilfunkendgeräts über die Funknetzzellen und/oder über das satellitengestützte Navigationssystem (GPS). So kann beispielsweise ein Mobilfunkteilnehmer, der über einen gültigen digitalen Schlüssel verfügt und dessen Mobilfunkendgerät die korrekten Koordinatendaten sendet, an einen Ort gelangen, der nur mit einem digitalen Schlüssel zugänglich ist. Eine unberechtigte Person, d.h. sie ist zu jung, mit ungültigem oder keinen digitalen Schlüsseln wird für solche Orte nicht zugelassen.

Eine weitere vorteilhafte Ausgestaltung des erfindungsgemäßen Verfahrens zur Altersverifikation besteht darin, Filtermittel vorzusehen, welche bei geänderten digitalen Schlüsseln nur gültige digitale Schlüssel zulassen. Diese Maßnahme dient dazu bei geänderten digitalen Schlüsseln solche herauszufiltern, die beispielsweise durch Manipulation geändert wurden. Auf diese Weise kann unberechtigten Mobilfunkteilnehmern mit ungültigen digitalen Schlüsseln der Zugang verwehrt werden.

In einer bevorzugten Ausbildung des erfindungsgemäßen Verfahrens werden bereits bei der Erfassung der Identifikation und des Alters eines Mobilfunkteilnehmers mehrere Passwörter festgelegt, aus welchen ein Passwort für die altersabhängigen Dienstleistungen auswählbar ist. Dadurch kann ein Mobilfunkteilnehmer sich zuvor Passwörter ausdenken, die aus seiner Sicht gut merkbar sind, aus denen wiederum ein digitaler Schlüssel generiert wird.

Weiterhin kann zur Generierung des digitalen Schlüssels für die altersabhängigen Dienstleistungen vorteilhafterweise ein Zufallsgenerator verwendet werden. Dabei kann eine Gewichtung bestimmter Ziffern des digitalen Schlüssels erfolgen.

Weitere Vorteile ergeben sich aus dem Gegenstand der Unteransprüche, sowie der Zeichnung mit der dazugehörigen Beschreibung.

### Kurze Beschreibung der Zeichnung

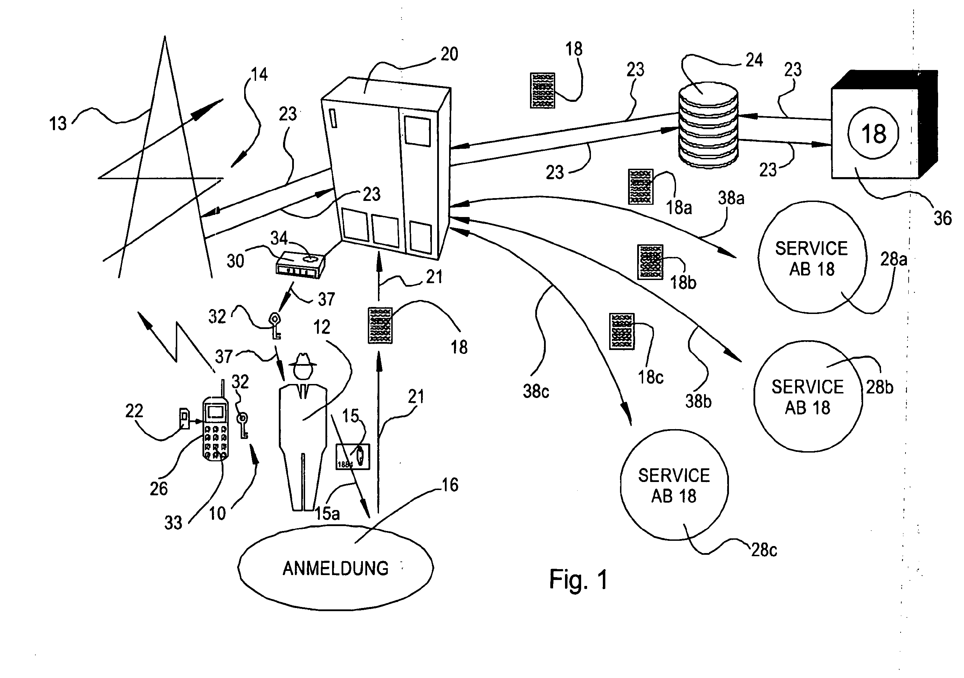

- Fig. 1: zeigt in einer Prinzipskizze ein Ausführungsbeispiel eines erfindungsgemäßen Verfahrens.

### Bevorzugtes Ausführungsbeispiel

Fig. 1 zeigt in einer Prinzipskizze ein Ausführungsbeispiel eines erfindungsgemäßen Verfahrens zur Altersverifikation 10. Ein Mobilfunkteilnehmer 12 muss sich zur Teilnahme an dem Mobilfunk eines Mobilfunknetzes 14 zunächst bei einem Betreiber anmelden. Das Mobilfunknetz 14 wird insbesondere durch den Sendemast 13 symbolisiert. Der Anmeldevorgang wird mit 16 bezeichnet. Dabei wird beispielsweise anhand des Personalausweises 15 neben der Aufnahme der Personalien die Altersverifikation 10 vorgenommen, Pfeil 15a. Die so aufgenommenen Identifikationsdaten 18 werden an eine Verwaltungseinheit 20 des Mobilfunknetzes 14 übermittelt, Pfeile 21. Pfeile 23 symbolisieren den Datenaustausch zwischen den einzelnen Komponenten des Mobilfunknetzes 14.

Der Mobilfunkbetreiber gibt dem Mobilfunkteilnehmer 12 bei der Anmeldung 16 eine individuelle SIM-Karte 22 (= Subscriber Identification Modul) aus. Persönliche Identifikationsdaten sind auf der SIM-Karte 22 gespeichert. Die zuvor aufgenommenen Identifikationsdaten 18 werden der SIM-Karte 22 in der Verwaltungseinheit 20 zugeordnet und in einer Datenbank 24 abgespeichert. Die SIM-Karte 22 wird von dem Mobilfunkteilnehmer 12 in ein Mobilfunkendgerät 26 eingesetzt und mit einer zu der SIM-Karte gehörigen PIN (= Personal Identification Number) aktiviert. Der Mobilfunkteilnehmer 12 erhält vom Betreiber neben der PIN eine Super-PIN, die zu weiteren Rechten bei bestimmten Anwendungen des Mobilfunkengeräts 26 führt. Nach dem Aktivieren des Mobilfunkendgeräts 26 mittels der SIM-Karte 22 kann der Mobilfunkteilnehmer 12 über das Mobilfunknetz 14 mit anderen Teilnehmern kommunizieren.

Es sind altersabhängige Dienstleistungen 28a, 28b, 28c vorgesehen, bei denen ein Mobilfunkteilnehmer 12 sein Alter nachweisen muss. Beispielhaft sind die drei solche altersabhängige Dienstleistungen 28a, 28b, 28c abgebildet. Die Dienstleistungen 28a, 28b, 28c können Bestandteil des Mobilfunknetzes 14, aber auch mobilfunkfremde Dienstleistungen sein. Der Mobilfunkteilnehmer 12 kann sich beim Mobilfunkbetreiber für solche altersabhängige Dienstleistungen 28a, 28b, 28c, beispielsweise bei der Anmeldung 16 für den Mobilfunk, registrieren lassen. Die entsprechenden Daten 18 werden dazu ebenfalls neben den anderen persönlichen Daten in der Datenbank 24 gespeichert.

Bei Bedarf, d.h. wenn ein Mobilfunkteilnehmer altersabhängige Dienstleistungen 28a, 28b, 28c in Anspruch zu nehmen wünscht, generiert ein Schlüsselgenerator 30 einen digitalen Schlüssel 32. Der Schlüsselgenerator 30 ist Bestandteil des Mobilfunknetzes 14 und enthält einen Zufallsgenerator 34, mit dessen Hilfe der digitale Schlüssel 32 erstellt wird. Der digitale Schlüssel 32 wird dem Mobilfunkteilnehmer 12 übermittelt, Pfeile 36 37. Die Übermittlung 37 kann über das Mobilfunknetz 14, beispielsweise als SMS oder MMS erfolgen. Der Mobilfunkteilnehmer 12 benötigt dann besondere Rechte für den Erhalt des digitalen Schlüssels 32 als SMS, um sich als Zugangsberechtigter auszuweisen. Dies kann beispielsweise über die üblicherweise nicht für Minderjährige zugängliche Super-PIN oder der Personalausweisnummer des Mobilfunkteilnemers 12 erfolgen. Der Mobilfunknetzbetreiber erkennt anhand der Super-PIN, durch einfachen Vergleich mit den in der Datenbank 24 gespeicherten Daten 18, ob es sich um den volljährigen Mobilfunkteilnehmer 12 handelt, der den Zugang angemeldet hat.

Der von dem Schlüsselgenerator 30 erzeugte digitale Schlüssel 32 besteht im vorliegenden Ausführungsbeispiel aus höchstens fünf Zeichen. Dies erlaubt es dem Mobilfunkteilnehmer 12 sich nur relativ wenig Zeichen merken zu müssen, und dennoch eine ausreichende Sicherheit vor unbefugten Zugriff durch einfaches Ausprobieren zu gewährleisten. Um es dem Mobilfunkteilnehmer (12) noch weiter zu erleichtern, werden Zeichenfolgen benutzt, die eine für ihn bekannte PIN enthalten. Grundsätzlich erfolgt die Generierung des digitalen Schlüssels 32 mit Hilfe des Zufallsgenerators 34. Dabei können bestimmte Zeichen gewichtet werden, so dass für einige Zeichen eine höhere Auftrittswahrscheinlichkeit als für andere Zeichen generiert wird. Die Gewichtung kann auch so eingestellt sein, dass sie nur für bestimmte Stellen der Zeichenfolge auftreten. Damit kann beispielsweise erreicht werden, dass nur aussprechbare Zeichenfolgen generiert werden.

Der Mobilfunkteilnehmer 12, der nun einen altersabhängigen Dienst 28a, 28b, 28c in Anspruch nehmen möchte, kann sein Alter mit Hilfe seines Mobilfunkendgerätes 26 nachweisen. Dazu gibt er seinen digitalen Schlüssel 32 beispielsweise über Tastatur 33 seines Mobilfunkendgeräts 26 ein, der von einer Kontrolleinheit 36 des Mobilfunknetzes überprüft wird. Die Kontrolleinheit 36 greift dazu auf die Daten 18 der Datenbank 24 zurück. Wenn der digitale Schlüssel 32 als gültig erkannt wird, wird dem Anbieter der altersabhängigen Dienstleistung mitgeteilt, Pfeile 38a, 38b, 38c, dass der Mobilfunkteilnehmer über das entsprechende Alter verfügt, ohne, dass der Mobilfunkteilnehmer 12 seine Identität gegenüber den Dienstleistern 28a, 28b, 28c preisgeben muss. Die Dienstleister 28a, 28b, 28c können ggf. auch selbst beim Mobilfunkbetreiber anfragen, ob ein digitaler Schlüssel 32 gültig ist, also eine ausreichende Altersberechtigung vorliegt. Die Dienstleister 28a, 28b, 28c sind dazu mit der Verwaltungseinheit 20 des Mobilfunknetzes verbunden. Dabei kann auch die Abfrage des digitalen Schlüssels 32 verschlüsselt werden, so dass auch dem Dienstleister 28a, 28b, 28c der eigentliche digitale Schlüssel 32 nicht bekannt wird. Der Dienstleister 28a, 28b, 28c erhält nur das Ergebnis 18a, 18b, 18c der Anfrage, dass der Mobilfunkteilnehmer 12 über das geeignete Alter verfügt. Auf diese Weise kann eine anonyme Altersverifikation über einen Mobilfunkbetreiber erfolgen. Der Mobilfunkteilnehmer muss seine Identität dem Dienstleister 28a, 28b, 28c gegenüber nicht bekannt geben.

## Patentansprüche

1. Verfahren zur Altersverifikation (10) über ein Mobilfunknetz (14) für altersabhängige Dienstleistungen (28a, 28b, 28c) mit folgenden Verfahrensschritten:
(a) Erfassen der Identifikation und des Alters eines Mobilfunkteilnehmers (12) in einer Speichereinheit (24) eines Mobilfunknetzbetreibers als Identifikationsdaten (18) eines Mobilfunkteilnehmers (12) bei Ausgabe einer SIM-Karte (22) für das Mobilfunkendgerät (26), welche zur Teilnahme am Mobilfunk berechtigt,
(b) Feststellen der Identifikation des Mobilfunkteilnehmers (12) beim Einbuchen in ein Mobilfunknetz (14) mittels Mobilfunkendgerät (26), wobei die weitere Identifikationsdaten auf einer SIM-Karte (22) gespeichert sind und an eine Verwaltungseinheit (20) des Mobilfunknetzes (14) übermittelt werden,
(c) Generieren eines digitalen Schlüssels (32) für die altersabhängigen Dienstleistungen, welcher an den für die altersabhängigen Dienstleistungen (28a, 28b, 28c) berechtigten Mobilfunkteilnehmer (12) übermittelt wird,
***gekennzeichnet durch***
(d) Überprüfen der Identität und der Berechtigung anhand des von dem Mobilfunkteilnehmer (12) eingegebenen digitalen Schlüssels (32) und der Identifikationsdaten (18) *des Mobilfunkteilnehmers,* welche in der Speichereinheit (24) des Mobilfunkbetreibers gespeichert sind, bei jeder Einbuchung in eine altersabhängige Dienstleistung (28a, 28b, 28c) **durch** die eine Kontrolleinheit (36) des Mobilfunknetzes (14).

2. Verfahren zur Altersverifikation über ein Mobilfunknetz (14) für altersabhängige Dienstleistungen (28a, 28b, 28c) nach Anspruch 1, **dadurch gekennzeichnet, dass** der digitale Schlüssel (32) mit höchstens 5 Ziffern generiert wird.

3. Verfahren zur Altersverifikation über ein Mobilfunknetz (14) für altersabhängige Dienstleistungen (28a, 28b, 28c) nach einem der Ansprüche 1 oder 2, **dadurch gekennzeichnet, dass** eine bestehende PIN (Personal Identification Number), welche zum Betreiben eines Mobilfunkendgeräts (26) mit einer SIM-Karte (22) erforderlich ist, ganz oder teilweise in den digitalen Schlüssel (32) für die altersabhängigen Dienstleistungen (28a, 28b, 28c) integriert wird.

4. Verfahren zur Altersverifikation über ein Mobilfunknetz (14) für altersabhängige Dienstleistungen (28a, 28b, 28c) nach einem der Ansprüche 1 bis 3, **dadurch gekennzeichnet, dass** mobilfunknetzfremde Dienstleistungen (28a, 28b, 28c) durch eine Verbindung mit der Kontrolleinheit (20, 24, 36) des Mobilfunknetzes (14) eine Altersverifikation durchführen können.

5. Verfahren zur Altersverifikation über ein Mobilfunknetz (14) für altersabhängige Dienstleistungen (28a, 28b, 28c) nach einem der Ansprüche 1 bis 4, **dadurch gekennzeichnet, dass** dem Mobilfunkteilnehmer (12) der digitale Schlüssel (32) für die altersabhängigen Dienstleistungen (28a, 28b, 28c) als SMS oder MMS an sein Mobilfunkendgerät (26) übermittelt wird.

6. Verfahren zur Altersverifikation über ein Mobilfunknetz (14) für altersabhängige Dienstleistungen (28a, 28b, 28c) nach einem der Ansprüche 1 bis 5, **dadurch gekennzeichnet, dass** der Mobilfunkteilnehmer zum Erhalten des digitalen Schlüssels (32) für die altersabhängigen Dienstleistungen (28a, 28b, 28c) eine Super-PIN und/oder einen Code für Administratorrechte für das Mobilfunkendgerät (26) zur Identifikation benötigt.

7. Verfahren zur Altersverifikation über ein Mobilfunknetz (14) für altersabhängige - Dienstleistungen (28a, 28b, 28c) nach einem der Ansprüche 1 bis 6, **dadurch gekennzeichnet, dass** eine Standortbestimmung des Mobilfunkendgeräts (26) über die Funknetzzellen und/oder über das satellitengestützte Navigationssystem (GPS) erfolgt.

8. Verfahren zur Altersverifikation über ein Mobilfunknetz (14) für altersabhängige Dienstleistungen (28a, 28b, 28c) nach einem der Ansprüche 1 bis 7, **gekennzeichnet durch** Filtermittel, welche bei geänderten digitalen Schlüsseln (32) nur gültige digitale Schlüssel (32) zulassen.

9. Verfahren zur Altersverifikation über ein Mobilfunknetz (14) für altersabhängige Dienstleistungen (28a, 28b, 28c) nach einem der Ansprüche 1 bis 8, **dadurch gekennzeichnet, dass** bei der Erfassung der Identifikation und des Alters eines Mobilfunkteilnehmers (12) mehrere Passwörter festgelegt werden, aus welchen ein Passwort für die altersabhängigen Dienstleistungen (28a, 28b, 28c) auswählbar ist.

10. Verfahren zur Altersverifikation über ein Mobilfunknetz (14) für altersabhängige Dienstleistungen (28a, 28b, 28c) nach einem der Ansprüche 1 bis 9, **dadurch gekennzeichnet, dass** zur Generierung des digitalen Schlüssels (32) für die altersabhängigen Dienstleistungen (28a, 28b, 28c) ein Zufallsgenerator verwendet wird.

## Claims

1. A method for age verification (10) by a mobile communication network (14) for age-related services (28a, 28b, 28c), the method comprising the following steps of:
(a) recording the identification and age of a mobile network subscriber (12) in a storage unit (24) of a mobile network operator as identification data (18) of a mobile network subscriber (12) while distributing a SIM card (22) for the mobile terminal (26) permitting participation in mobile communication;
(b) determining the identification of the mobile network subscriber (12) when accessing a mobile communication network (14) with the mobile terminal (26) whereas further identification data have been stored on a SIM card (22) and are transmitted to a management unit (20) in the mobile communication network (14);
(c) generating a digital key (32) for the age-related services, which is transmitted to the mobile network subscriber (12) authorised for the age-related services (28a, 28b, 28c),
**characterised by**
(d) verifying the identity and the authorisation with the digital key (32) entered by the mobile network subscriber (12) and the identification data (18) of the mobile network subscriber stored in the storage unit (24) of the mobile network operator during each access to a age-related service (28a, 28b, 28c) with a control unit (36) in the mobile communication network (14).

2. A method for age verification by a mobile communication network (14) for age-related services (28a, 28b, 28c) according to claim 1 **characterised in that** the digital key (32) is generated with a maximum of 5 ciphers.

3. A method for age verification by a mobile communication network (14) for age-related services (28a, 28b, 28c) according to claim 1 or 2 **characterised in that** a existing PIN (Personal Identification Number) requested for using a mobile terminal (26) with a SIM card (22) is completely or partially integrated into the digital key (32) for the age-related services (28a, 28b, 28c).

4. A method for age verification by a mobile communication network (14) for age-related services (28a, 28b, 28c) according to any one of claim 1 to 3 **characterised in that** services (28a, 28b, 28c) external to the mobile communication network can perform an age verification by a connection to the control unit (20, 24, 36) of the mobile communication network (14).

5. A method for age verification by a mobile communication network (14) for age-related services (28a, 28b, 28c) according to any one of claim 1 to 4 **characterised in that** the digital key (32) for the age-related services (28a, 28b, 28c) is transmitted to the mobile network subscriber (12) by SMS or MMS onto his mobile terminal (26).

6. A method for age verification by a mobile communication network (14) for age-related services (28a, 28b, 28c) according to any one of claim 1 to 5 **characterised in that** the mobile network subscriber needs a super pin and/or a code for rights of administrating the mobile terminal (26) for identification to receive the digital key (32) for age-related services (28a, 28b, 28c).

7. A method for age verification by a mobile communication network (14) for age-related services (28a, 28b, 28c) according to any one of claim 1 to 6 **characterised in that** a position-fixing is performed for the mobile terminal (26) by the cells of the mobile communication network or the satellite navigation system (GPS).

8. A method for age verification by a mobile communication network (14) for age-related services (28a, 28b, 28c) according to any one of claim 1 to 7 **characterised by** filter means which, with changed digital keys (32), only permit valid digital keys (32).

9. A method for age verification by a mobile communication network (14) for age-related services (28a, 28b, 28c) according to any one of claim 1 to 8 **characterised in that** during recording the identification and age of a mobile network subscriber (12) multiple passwords are determined from which one password is selectable for the age-related services (28a, 28b, 28c).

10. A method for age verification by a mobile communication network (14) for age-related services (28a, 28b, 28c) according to any one of claim 1 to 9 **characterised in that** a random generator is used generating the digital key (32) for the age-related services (28a, 28b, 28c).

## Revendications

1. Procédé de vérification de l'âge (10) par l'intermédiaire d'un réseau de radiotéléphonie mobile (14) destiné à des prestations de service (28a, 28b, 28c) dépendant de l'âge, aux étapes de procédé suivantes :
(a) saisie de l'identification et de l'âge d'un utilisateur de radiotéléphonie mobile (12) dans une unité de mémoire (24) d'un exploitant de réseau de radiotéléphonie mobile sous forme de données d'identification (18) d'un utilisateur de radiotéléphonie mobile (12) lors de la délivrance d'une carte SIM (22) destinée au terminal de radiotéléphonie mobile (26) autorisant l'utilisation de la radiotéléphonie mobile,
(b) établissement de l'identification de l'utilisateur de radiotéléphonie mobile (12) lors de la connexion dans un réseau de radiotéléphonie mobile (14) au moyen d'un terminal de radiotéléphonie mobile (26), d'autres données d'identification étant mémorisées sur une carte SIM (22) et transmises à une unité d'administration (20) du réseau de radiotéléphonie mobile (14),
(c) génération d'une clé numérique (32) destinée aux prestations de service dépendant de l'âge qui est transmise à l'utilisateur de radiotéléphonie mobile (12) autorisé à utiliser les prestations de service (28a, 28b, 28c) dépendant de l'âge,
**caractérisé en ce que**
(d) vérification de l'identité et de l'autorisation à l'aide de la clé numérique (32) entrée par l'utilisateur de radiotéléphonie mobile (12) et des données d'identification (18) de l'utilisateur de radiotéléphonie mobile qui sont mémorisées dans l'unité de mémoire (24) de l'exploitant du réseau de radiotéléphonie mobile lors de chaque connexion dans une prestation de service (28a, 28b, 28c) dépendant de l'âge grâce à une unité de contrôle (36) du réseau de radiotéléphonie mobile (14).

2. Procédé de vérification de l'âge par l'intermédiaire d'un réseau de radiotéléphonie mobile (14) destiné à des prestations de service (28a, 28b, 28c) dépendant de l'âge selon la revendication 1, **caractérisé en ce que** la clé numérique (32) est générée à l'aide d'au maximum 5 chiffres.

3. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 ou 2, **caractérisé en ce qu'**un PIN (numéro personnel d'identification) disponible, nécessaire à l'utilisation d'un terminal de radiotéléphonie mobile (26) avec une carte SIM (22), est intégré en entier ou en partie dans la clé numérique (32) destinée aux prestations de service (28a, 28b, 28c) dépendant de l'âge.

4. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 3, **caractérisé en ce que** des prestations de service (28a, 28b, 28c) étrangères au réseau de radiotéléphonie mobile peuvent réaliser une vérification de l'âge grâce à une connexion à l'unité de contrôle (20, 24, 36) du réseau de radiotéléphonie mobile (14).

5. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 4, **caractérisé en ce que** la clé numérique (32) destinée aux prestations de service (28a, 28b, 28c) dépendant de l'âge est transmise à l'utilisateur de radiotéléphonie mobile (12) sous forme de SMS ou de MMS envoyée à son terminal de radiotéléphonie mobile (26).

6. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 5, **caractérisé en ce que**, pour obtenir la clé numérique (32) destinée aux prestations de service (28a, 28b, 28c) dépendant de l'âge, l'utilisateur du réseau de radiotéléphonie mobile a besoin d'un super PIN et/ou d'un code pour les droits d'administration pour le terminal de radiotéléphonie mobile (26) en vue de l'identification.

7. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 6, **caractérisé en ce qu'**une détermination du lieu du terminal de radiotéléphonie mobile (26) est réalisée par l'intermédiaire de cellules de réseau de radiotéléphonie et/ou par l'intermédiaire d'un système de navigation par satellite (GPS).

8. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 7, **caractérisé par** des moyens de filtration autorisant uniquement les clés numériques valables (32) dans le cas de clés numériques modifiées (32).

9. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 8, **caractérisé en ce que**, lors de la saisie de l'identification et de l'âge d'un utilisateur de radiotéléphonie mobile (12), on établit plusieurs mots de passe parmi lesquels un mot de passe peut être choisi pour les prestations de service (28a, 28b, 28c) dépendant de l'âge.

10. Procédé de vérification de l'âge par l'intermédiaire d'un réseau de radiotéléphonie mobile (14) destiné à des prestations de service (28a, 28b, 28c) dépendant de l'âge selon l'une quelconque des revendications 1 à 9, **caractérisé en ce que**, pour générer la clé numérique (32) destinée aux prestations de service (28a, 28b, 28c) dépendant de l'âge, on utilise un générateur aléatoire.
